# EUROPEAN PATENT APPLICATION

(11) **EP 4 395 207 A1**
(43) Date of publication of application: **03.07.2024**
(21) Application number: 22866576.6
(22) Date of filing: 06.09.2022
(51) Int. Cl.: H04L 1/00

(54) **METHOD AND APPARATUS FOR SENDING CELL FLOW, NETWORK DEVICE, AND COMPUTER-READABLE STORAGE MEDIUM**

(30) Priority: 10.09.2021 CN 202111061216
(71) Applicant: ZTE Corporation, Shenzhen, Guangdong 518057 (CN)
(72) Inventor: LIU, Feng, Shenzhen, Guangdong 518057 (CN)
(74) Representative: Canzler & Bergmeier Patentanwälte Partnerschaft mbB
(86) International application number: PCT/CN2022/117207
(87) International publication number: WO 2023/036113

(57) **Abstract**

The present application provides a method for sending a cell flow, an apparatus for sending a cell flow, a network device, and a computer-readable storage medium. The method for sending a cell flow comprises: detecting a time deviation value between the actual sending time of a cell in a designated device and a reference time; calculating the number of code blocks corresponding to the time deviation value; and controlling the designated device to insert, according to the number of code blocks, a code block of a predetermined type into the sent cell flow, so as to adjust the actual sending time of the cell in the designated device to the reference time.

## Description

### CROSS REFERENCE TO RELATED APPLICATIONS

The present disclosure claims the priority to Chinese Patent Application No. 202111061216.5 filed on September 10, 2021, the contents of which are incorporated herein by reference in their entirety.

### TECHNICAL FIELD

The present disclosure relates to the field of communication networks, and in particular, to a method for sending a cell stream, an apparatus for sending a cell stream, a network device, and a computer-readable storage medium.

### BACKGROUND

In a case where cells are used to transmit customer services in a communication network, there is a frequency deviation between system operating clocks of different devices, resulting in inconsistent speeds of a cell stream in the different devices. Therefore, it is hard to maintain stability of the speed of the cell stream between the devices in the network, resulting in unstable and uncertain phase positions between cell streams.

### SUMMARY

An embodiment of the present disclosure provides a method for sending a cell stream, including: detecting a time deviation value between an actual time of sending a cell in a designated device and a reference time; calculating a total number of code blocks corresponding to the time deviation value; and controlling the designated device to insert code blocks of a preset type into the cell stream to be sent according to the number of the code blocks, so as to adjust the actual time of sending the cell in the designated device to the reference time.

An embodiment of the present disclosure provides an apparatus for sending a cell stream, including: a time detection module configured to detect a time deviation value between an actual time of sending a cell in a designated device and a reference time; a code block calculation module configured to calculate a total number of code blocks corresponding to the time deviation value; and a code block insertion module configured to control the designated device to insert code blocks of a preset type into the cell stream to be sent according to the number of the code blocks, so as to adjust the actual time of sending the cell in the designated device to the reference time.

An embodiment of the present disclosure provides a network device, including: at least one processor; and a memory having stored thereon at least one computer program which, executed by the at least one processor, causes the at least one processor to implement the method for sending the cell stream according to the embodiment of the present disclosure.

An embodiment of the present disclosure provides a computer-readable storage medium storing a computer program which, executed by a processor, causes the processor to implement the method for sending the cell stream according to the embodiment of the present disclosure.

With respect to the above embodiments and other aspects of the present disclosure and the implementations thereof, further description is provided in BRIEF DESCRIPTION OF DRAWINGS, DETAIL DESCRIPTION OF EMBODIMENTS, and claims.

### BRIEF DESCRIPTION OF DRAWINGS

FIG. 1 is a schematic diagram of a cell transfer process in a network according to an embodiment of the present disclosure.
FIG. 2 is a schematic structural diagram illustrating converging a plurality of cell streams into one cell stream according to an embodiment of the present disclosure.
FIG. 3 is a schematic diagram illustrating a cell service processing process inside a device according to an embodiment of the present disclosure.
FIG. 4 is a schematic diagram illustrating a process of sequentially transferring cells according to an embodiment of the present disclosure.
FIG. 5 is a schematic diagram of a 64/66 encoding rule defined in the 802.3 standard according to an embodiment of the present disclosure.
FIG. 6 is a schematic structural diagram of cells in a cell stream after idle blocks are inserted into the cell stream according to an embodiment of the present disclosure.
FIG. 7 is a schematic structural diagram of a cell multiframe according to an embodiment of the present disclosure.
FIG. 8 is a flowchart illustrating a method for sending a cell stream according to an embodiment of the present disclosure.
FIG. 9 is a schematic structural diagram of a service processing apparatus according to an embodiment of the present disclosure.
FIG. 10 is a schematic structural diagram of an apparatus for sending a cell stream according to an embodiment of the present disclosure.
FIG. 11 is a schematic block diagram of an exemplary network device configured to implement an embodiment of the present disclosure.

### DETAIL DESCRIPTION OF EMBODIMENTS

In order to make the objectives, technical solutions and advantages of the present disclosure clearer, the embodiments of the present disclosure are described in detail below in conjunction with the drawings. It should be noted that the embodiments herein and the features therein may be arbitrarily combined with one another if no conflict is incurred.

In some implementations of the present disclosure, a rapid increase in network information traffic of users promotes a rapid development of an information transmission bandwidth of a communication network, an interface bandwidth speed of a communication device has increased from 10M (megabit/second) to 100M and then to 1G (gigabit/second) and 10G, and has currently reached a bandwidth speed of 100G. A large number of 100G optical modules have been commercially used in the market.

In a high bandwidth application, the network is still desired to be compatible with existing low-speed private line services, such as the private line services of electricity customers, bank customers, and railway customers. The private line bandwidth purchased by any of these customers is generally much less than an interface bandwidth at a network port of a device, but each customer has very high requirements on a service quality of a bandwidth service, the bandwidth speed desired by each customer is relatively stable, and thus the bandwidth of each customer should be guaranteed to be isolated physically and not to be affected by other customer services (even if the customer would not use the bandwidth itself, the bandwidth is not to be shared with other customers). In a case where a high-bandwidth service and a low-bandwidth service exist on a network simultaneously, strict physical isolation between different services is to be desired, so that mutual influences between the different services is to be avoided completely. To achieve above, a commonly solution to be used is cell transferring.

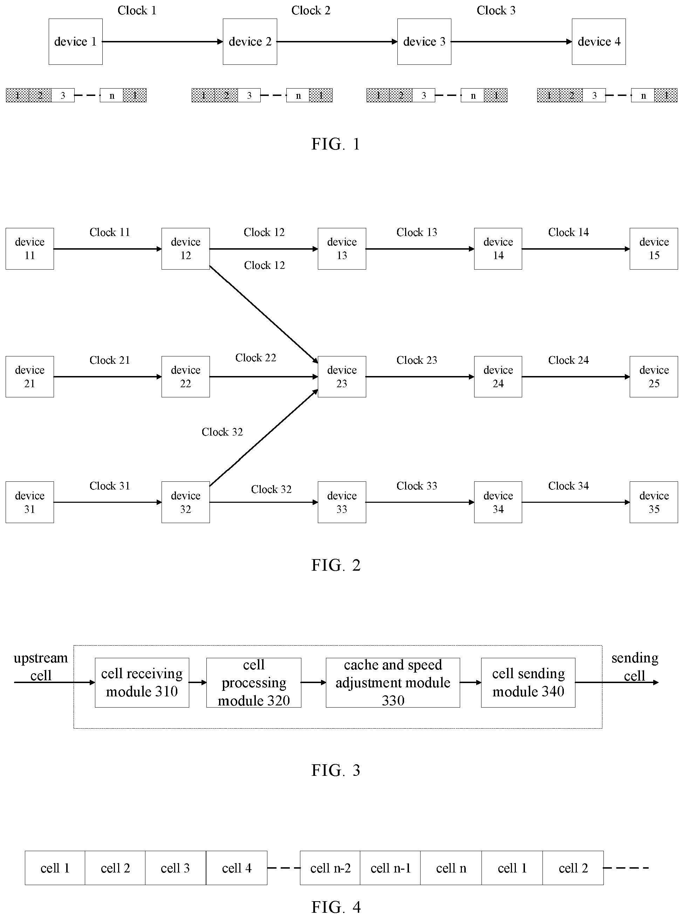

FIG. 1 is a schematic diagram of a cell transfer process in a network according to an embodiment of the present disclosure, and exemplarily shows four node devices on a communication link in a network, and the four node devices include a device 1, a device 2, a device 3, and a device 4. As shown in FIG. 1, a data structure transferred on the communication link is a cell stream including cells, each cell is a basic unit with a fixed length and a fixed format feature, and carries a sequence number, and sequence numbers carried by different cells may be used to distinguish between the different cells, so that customer services may be carried on the different cells.

It should be understood that the number of the devices shown in FIG. 1 is merely illustrative. The node devices on the communication link may be flexibly set as desired according to an actual application environment.

In FIG. 1, the device 1 may send a series of cells at a system operating clock frequency clockl, the device 2 may send a series of cells at a system operating clock frequency clock2, the device 3 may send a series of cells at a system operating clock frequency clock3, and so on, so that actual frequencies of transmitting the cell stream in different devices are different.

Since each single cell is to be transmitted over a relatively small transmission bandwidth and a customer service may be transferred through a plurality of cells simultaneously, a speed of the customer service may be increased by using a plurality of cells. That is, if a bandwidth of the customer service is relatively small, the customer service may be carried and transferred through one cell; and if a speed of the customer service is relatively large, the customer service may be carried and transferred through a plurality of cells. By associating the speed of the customer service with the number of the cells for carrying the customer service, a communication link may carry customer services with different speeds, so that different bandwidth requirements of various customer services may be met. Moreover, since the cells are strictly isolated from each other, strict physical isolation may be realized between different customer services. Each cell shown in FIG. 1 is a base unit for independent carrying, and each cell may carry merely one customer service. In some application scenarios, each cell may be divided into a plurality of sub-slots, merely one customer service is carried in each sub-slot, each customer service may be carried in one or more sub-slots, different customer services are carried in different sub-slots, and the customer services are completely isolated from each other, which is also a cell carrying mode and belongs to the scope of the present disclosure. The cells (also called basic units) of the present disclosure are a group of basic units each with a fixed length and a fixed format feature, and each basic unit may be taken as a whole without being divided into sub-slots; or, each base unit may be divided into several sub-slots, and customer services may be carried in different sub-slots, which also belongs to the scope of the present disclosure. Any of the cases described above belongs to the scope of the present disclosure.

In FIG. 1, since the cell stream is sent from an initial node device, an actual speed of the cell stream may be determined by a speed at the initial node device. In the Ethernet standard specifications, a frequency deviation between operating clock frequencies of Ethernet interfaces of devices is allowed to be in a range of ±100PPM (PPM: parts per million). Since a speed of a cell during transmission is affected by a system operating clock frequency of a device, a frequency deviation between system operating clocks of different devices may cause an unstable speed of the cell stream.

Taking the device 2 as an example, a cell stream transferred from the device 1 is received by the device 2, and a speed of the cell stream is determined by the operating clock frequency of the device 1, and moreover, the device 2 also sends a cell stream to the device 3 according to the operating clock frequency of the device 2. Since a frequency deviation may exist between the clock of the device 2 and the clock of the device 1, a speed of receiving the cell stream at the device 2 may not be the same as a speed of sending the cell stream at the device 2. If the speed of receiving the cell stream is greater than the speed of sending the cell stream, some cells cannot be sent and are accumulated at the device 2, which eventually causes buffer overflow and the service is interrupted. If the speed of receiving the cell stream is less than the speed of sending the cell stream, there is no sufficient cell stream for the device 2 to send, resulting in an empty reading phenomenon.

In order to solve the problem of the inconsistent operating clock frequencies of different devices, appropriate idle information blocks (e.g., IDLE blocks) may be inserted into the cells for adjusting the speed of the cell stream. However, the insertion of the IDLE blocks may lead to a result that receiving times and sending times of the cells are uncertain at each device, and phase positions of cell streams relative to each other are random and unstable.

FIG. 2 is a schematic structural diagram illustrating converging a plurality of cell streams into one cell stream according to an embodiment of the present disclosure.

As shown in FIG. 2, in some application scenarios, cell streams on a plurality of access links may be converged into the cell flow on one link. For example, the cell stream including part of cells on the first link and the cell stream including part of cells on the third link are converged into the cell stream on the second link, so that the cell streams from three directions are converged into one cell stream on the second link. Due to the existence of the cell streams from two or more directions, if clock frequencies of the cell streams from the different directions are not consistent, the speed of the cell stream in a sending direction cannot be consistent with speeds of the cell streams from all different directions, and thus the cell streams cannot be converged directly; and the cell streams from all the directions can be converged merely in a case where the speeds of the cell streams from all the directions are adjusted to be the same.

As can be seen from the above, if there is a difference between the clock frequencies of the devices, the speeds of the cell stream at the different devices are not the same, resulting in difficulty in transmitting services between different nodes; and in particular, two cell streams from different directions cannot be converged into one cell stream in a case where the speeds of the two cell streams are not the same. How to ensure normal transferring of the cells on the network and prevent the cells from being affected by the clock of the device on each node is an urgent problem to be solved for the existing solution of adopting the cells to transfer the customer services. A phase position of the cell stream is related to an initial time at which each device starts to send cells. Since a power-on time of each device for sending cells is random, even if system clock frequencies of all network devices can be made consistent and speeds of cell streams can be made consistent by adopting a clock frequency synchronization mode, phase positions of the cell streams may not be consistent; and phase positions of cells are related to an operating time after each power-on process, and thus are random and unstable.

Even if speed synchronization of the cell streams is realized between the devices, a phase relationship between the cells is merely temporarily stable, and the phase positions of the cells relative to each other after each power-on process are also random and are related to power-on times and power-on instantaneous states of the devices. Since the phase positions of the cells relative to each other cannot be made constant and stable, an additional delay time of the customer services carried in the cell stream is caused.

In some implementations, for any device, if a phase position of a cell sent from upstream is not consistent with a phase position of a cell sent downstream by the device, that is, a phase mismatch exists between the cells, and moreover, the phase mismatch between the cells is uncertain, the device would miss a sending opportunity after receiving the cell from upstream, and cannot directly send the cell, so that the cell is to be cached.

FIG. 3 is a schematic diagram illustrating a cell service processing process inside a device according to an embodiment of the present disclosure.

As shown in FIG. 3, the device may include a cell receiving module 310, a cell processing module 320, a cache and speed adjustment module 330, and a cell sending module 340.

The cell receiving module 310 is configured to receive a cell from upstream and send the cell received from upstream to the cell processing module 320. The cell processing module 320 is configured to perform cell processing on the cell received from upstream and extract client content from the cell. The cache and speed adjustment module 330 is configured to cache the client content and adjust the speed of the cell. The cell sending module 340 is configured to repackage the cell at the adjusted speed into a cell to be sent, and send and output the cell to be sent at a sending time. If the speed at a transmit port is different from the speed at the upstream receiving port, a phase position of the sent cell and a phase position of the received cell are floating and uncertain. For example, the speeds at the ports in different three receiving directions are different, the speed of the cells converged in a transmitting direction is different from the speed in any of the three receiving directions.

In FIG. 2, even if the clock frequencies of all the devices are kept consistent by adopting the clock synchronization mode, a problem of a phase deviation between a cell at a receiving port and a cell at a transmitting port in a device 23 cannot be solved.

In FIG. 2, cells from three directions are converged together at the device 23, the cells from the different directions are at a same speed but have different phases; and in a convergence mode from multiple directions to one direction, a deviation always exists between the phase of the cell from part of the directions at a receiving end and the phase of the cell at a transmitting end, and the device is desired to cache the cell to solve the problem.

For example, at a fixed time, a sequence number of a cell sent by a device 12 to the device 23 is cell 5, a sequence number of a cell sent by a device 22 to the device 23 is cell 40, a sequence number of a cell sent by a device 32 to the device 23 is cell 90, the cells simultaneously sent by the device 12, the device 22, and the device 32, i.e., the cell 5, the cell 40, and the cell 90, have inconsistent phases, and a sequence number of a cell sent by the device 23 at the current time is cell 40. Therefore, the content of the cell 40 from the device 22 may be sent out immediately, but the content of the cell 5 received from the device 12 and the content of the cell 90 received from the device 32 are to be cached to wait, and may be sent out until corresponding sending times arrive. The greater the phase deviation between the cell at the receiving end and the cell at the transmitting end is, the greater the amount to be cached is; and the less the phase deviation between the cell at the receiving end and the cell at the transmitting end is, the less the amount to be cached is. In order to meet a requirement of a floating range of the phase difference between the phase of the received cell and the phase of the cell to be sent, the cache size is to be designed according to the maximum amount to be cached, to cache a large amount of customer service information to meet a requirement of the maximum floating range of the phase difference in a floating process, resulting in the additional delay time of the customer services.

FIG. 4 is a schematic diagram illustrating a process of sequentially transferring cells according to an embodiment of the present disclosure.

In the embodiment of the present disclosure, the cell carrying the customer service is generally an information set with a fixed length and a fixed format. As shown in FIG. 4, for a cell 1, a cell 2, a cell 3, a cell 4, ..., a cell n-2, a cell n-1, and a cell n, each cell has a fixed length, and all the cells are sent in sequence, and are sent cyclically in sequence.

In the embodiment of the present disclosure, the cell may be defined as an information bit stream set with a fixed length and a fixed format feature, and the information bit stream set may be in various specific forms. For example, the cell may be an Ethernet message with a fixed length and a fixed format, or the cell may be a specific code block group with a fixed length, including specific code blocks.

The specific code block may be in various encoding modes, such as an 8/10 (8-bit/10-bit) code block or a 64/66 (64-bit/66-bit) code block. In an Ethernet network, an Ethernet message, for being transmitted on a link, is to be converted into code blocks, such as 8b/10b code blocks or 64/66-bit code blocks. The information slice of the Ethernet message with the fixed-length, after being encoded, may be expressed as a code block group with a fixed-length, for example, the message, in a high-speed Ethernet interface, may be converted into the 64/66-bit code blocks.

For convenience of description, the following description is given by taking a cell being a 64/66 code block group with a fixed length as an example. In this example, the exemplary cell includes an S code block, a D code block, and a T code block. The exemplary cell starts with the S code block, includes a plurality of D code blocks in the middle, and finally ends with the T code block; and the S code block serves as a start flag of the cell, the D code blocks are a main body of the cell, and the T code block serves as an end flag of the cell. It should be understood that a method of processing the Ethernet message encoded into the 8/10 code blocks or other fixed-length code blocks is the same as that of processing the Ethernet message encoded into the fixed-length 64/66 code blocks, and thus will not be described in detail here. The same implementation principle is applicable to other types of cell formats.

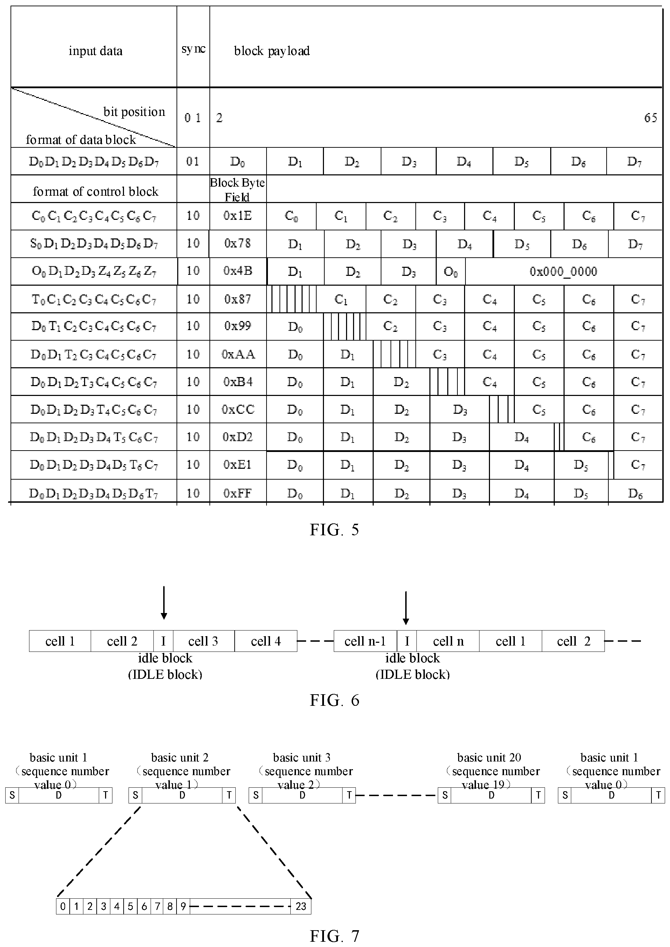

FIG. 5 is a schematic diagram of a 64/66 encoding rule defined in the 802.3 standard according to an embodiment of the present disclosure.

As shown in FIG. 5, if an Ethernet data message is subjected to 64/66 encoding, the 64-bit customer data content can be encoded into 66-bit code blocks, and the first two bits in any 66-bit code block are sync header bits (i.e., sync in FIG. 5). The 66-bit code blocks are classified into two types, i.e., data blocks (referred to as D blocks for short) and control blocks. In any data block, the first two bits are "01" and the remaining 64 bits are customer information content. In any control block, the first two bits are " 10", the first byte of the remaining 64 bits is Block Byte Field which includes 8 bits and is configured to indicate a type of the control block. According to the Block Byte Field, the control blocks are classified as an idle block (e.g., an IDLE block, the content of the Block Byte Field is 0x1E), an S block (the content of the Block Byte Field is 0x78), an O block (the content of the Block Byte Field is 0x4B), and a T block (which is further classified into eight types from T0 to T7, and the content of the Block Byte Field is correspondingly 0x87, 0x99, 0xAA, 0xB4, 0xCC, 0xD2, 0xE1, or 0xFF). Illustratively, the control blocks are in multiple types and are configured to represent different meanings, for example, a message start indication block, i.e., the S block, is configured to indicate a head block of the message; a message end indication block, i.e., the T block, is configured to indicate a tail block of the message, the T block may be further classified into the eight types from T0 to T7 (in addition to the function to indicate the tail block of the message, different T blocks have the function of the D block and can carry different client information, T0 carries 0 byte of client information, T1 carries 1 byte of client information, and so on); and the other control blocks include a fault information indication block, i.e., the O block, and an idle information block (i.e., the IDLE block, referred to as I block for short).

The Ethernet message is encoded into a code block stream, the code block stream starts with the S block, has the D blocks arranged in the middle, and finally ends with the T block (i.e., S block+D blocks+T block). Some I blocks and O blocks may exist between code block streams of two successive messages. The I blocks are idle blocks, and if there is idle space between the messages, the I blocks are used for padding in a case where there is no data message.

FIG. 6 is a schematic structural diagram of cells in a cell stream after idle blocks are inserted into the cell stream according to an embodiment of the present disclosure.

As shown in FIG. 6, an I block is inserted between a cell 2 and a cell 3, and an I block is inserted between a cell n-1 and a cell n. In some implementations, the O block may be arranged between the cells to delivery fault information.

In the embodiment of the present disclosure, as the code blocks not related to the customer services, the I block (i.e., the IDLE block) and the O block may be used for speed adaptation in addition to being configured to pad idle positions between the cells. If the number of the inserted I blocks or O blocks is increased, a proportion of effective service flows is reduced, which is equivalent to the reduction of a service speed; and if the number of the padded I blocks or O blocks is reduced, the proportion of the effective service flows is increased, which is equivalent to the increase of the service speed. It is defined in the Ethernet standard that the clock frequency deviation is in the range of ±100PPM (i.e., a total range of 200PPM), and an adaptation to the frequency deviation between different devices can be achieved by increasing or reducing the number of the IDLE blocks in the customer service flows.

In view of the above, in the method for sending the cell stream provided in the embodiment of the present disclosure, the time of sending the cell stream may be adjusted by adjusting the number of IDLE blocks and/or the number of O blocks and other code blocks not related to the customer services to make the time of sending the cell stream the same as the reference time, so that, under a condition that time synchronization of all devices is realized and reference times of all the devices are the same, times of sending cell streams at all the devices are made the same, thereby enabling the cells sent by all the devices to have a stable speed and a constant phase position. In the solution provided in the embodiment of the present disclosure, the IDLE block and the O block may be used to perform speed adjustment, and the IDLE block and the O block used for the speed adjustment are collectively referred to as specific code blocks, and an adjustment on the times of sending the cells is realized by adjusting the number of the specific code blocks to be inserted. After the cell stream has a constant speed and a stable phase position, a phase position difference between phases of cells received by all receiving ends and phases of cells sent by the transmitting end in a same device is also stable. If the phase position difference between the phases of the cells received by the receiving ends and the phases of the cells sent by the transmitting end is always constant, no extra buffer is desired during the cells being processed in the device for solving a problem of an influence caused by a fluctuation in the phase difference between the cells at the receiving ends and the cells at the transmitting end, the device is merely to properly configure services at the transmitting end according to the phase positions, and the cells are not to be cached to wait after being received and processed in the device and can be sent out immediately, thereby reducing the delay time of the service carried by the cells in the device.

FIG. 7 is a schematic structural diagram of a cell multiframe according to an embodiment of the present disclosure.

In the embodiment of the present disclosure, a Fine Grain Base Unit (fg-BU) may be defined according to a pre-obtained enterprise standard specification for fine grain slicing technology, such as an enterprise standard of a communication operator, and each Fine Grain Base Unit is a cell defined in the present disclosure. In the enterprise standard of the communication operator, each Fine Grain Base Unit may include 197 66-bit code blocks (one S block+195 D blocks+one T block), and each Fine Grain Base Unit includes a sequence number flag field, in which a sequence-number value is changed from 0 to 19 in a fixed order, 20 Fine Grain Base Units (i.e., 20 cells) form one Fine-Grain-Base-Unit multiframe structure (i.e., a cell multiframe), and each Fine-Grain-Base-Unit multiframe includes 20 Fine Grain Base Units having sequence-number values from 0 to 19.

Each Fine Grain Base Unit is divided into 24 sub-slots, there are 480 sub-slots in total in the 20 Fine Grain Base Units, and a customer service may be selectively carried in any number of sub-slots. The Fine Grain Base Unit is transmitted in one 5G-speed (bit/second) slot or a plurality of 5G slots of the Flexible Ethernet (FlexE) and is carried and sent through an FlexE interface. If the Fine Grain Base Unit is carried in one 5G-speed FlexE slot, a bandwidth of each sub-slot in the Fine Grain Base Unit is about 10M (megabits/second).

Taking each Fine Grain Base Unit as one cell, according to the method for sending the cell stream provided in the embodiment of the present disclosure, the number of idle code blocks to be inserted is obtained based on a difference between the reference time and a time of sending the Fine Grain Base Unit, and the time of sending the Fine Grain Base Unit is adjusted to be the same as the reference time by inserting a proper number of idle blocks between the Fine Grain Base Units, so as to keep consistency of sending times of transmitting ends of all devices for sending the Fine Grain Base Units.

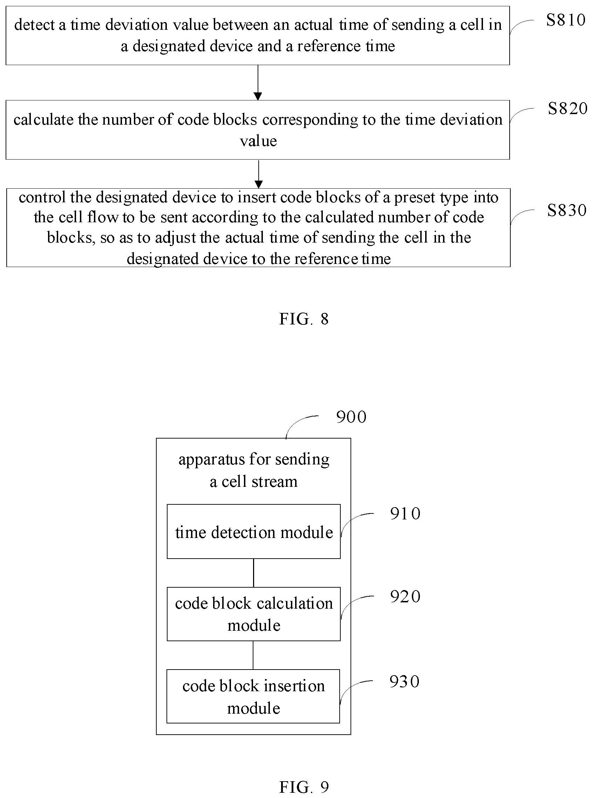

FIG. 8 is a flowchart illustrating a method for sending a cell stream according to an embodiment of the present disclosure. As shown in FIG. 8, the method for sending the cell stream according to the embodiment of the present disclosure may include following operations S810 to S830: S810, detecting a time deviation value between an actual time of sending a cell in a designated device and a reference time; S820, calculating the number of code blocks corresponding to the time deviation value; and S830, controlling the designated device to insert code blocks of a preset type into the cell stream to be sent according to the calculated number of code blocks, so as to adjust the actual time of sending the cell in the designated device to the reference time.

In the method for sending the cell stream provided in the embodiment of the present disclosure, the actual time of sending the cell is a clock time at which the cell is actually sent.

According to the method for sending the cell stream provided in the embodiment of the present disclosure, after the time deviation value between the actual time of sending the cell in the designated device and the reference time is detected, the number of code blocks to be inserted is calculated according to the time deviation value, and the designated device for sending cells is controlled to insert the specific code blocks between the cells to be sent according to the calculated number of code blocks to be inserted to adjust the actual time of sending the cell to the reference time, so as to realize an adjustment on a transmitting speed and a transmitting phase of the cells, thereby realizing a speed synchronization between the cells, enabling phase positions of the cells to be constant and stable, enabling the cells to be in a co-speed and co-phase state, and reducing the delay time of the cells.

In some implementations, the operation S810 may include following operations S11 to S13: S 11, according to the reference time, selecting a cell with a preset sequence number in the designated device as a reference cell to be subjected to a time comparison; S12, determining a time comparison period according to the reference time; and S13, , performing a time comparison in each time comparison period to detect a time deviation value between an actual time of sending the reference cell and the reference time.

Through the operations S11 to S13, the cell to be subjected to the time comparison is selected as the reference cell according to the reference time, so that the actual time of sending the reference cell is aligned with the reference time. For example, the cell with the sequence number of 0 (cell 0 for short) may be selected as the reference cell according to the reference time, or the cell with another sequence number may be selected as the reference cell; if the cell 0 is selected as the reference cell, whether the cell 0 has been already sent at the reference time (that is, the acquired reference time is taken as a reference time for sending the cell 0) is to be detected; and what time the cell 0 is sent (i.e., the actual time of sending the cell 0) is to be detected, that is, the transmitting end of the designated device provides the time of sending the cell with the sequence number of 0 during sending cells, and the actual time of sending the cell 0 is compared with the reference time to obtain the time deviation value between the actual time of sending the cell 0 and the reference time.

In some implementations, the reference time includes any one of following time values obtained by a preset time acquisition method: a time value of a Global Clock corresponding to the cell, an occurrence time value of a pulse having a global clock attribute, or a desired value of the time of sending the cell. The time comparison period is a value of a time duration between two consecutive reference times. The preset time acquisition method includes using any one of: a calibration of a 1588 function supported by the designated device, a Global Positioning System (GPS) clock signal, and an external clock source.

In the method for sending the cell stream provided in the embodiment of the present disclosure, the time comparison period may be understood as an appearance period of the reference time, and the value of the time duration between two consecutive reference times may be taken as the time comparison period. In some implementations, the value of the time duration between every two consecutive reference times may be a constant time duration value, that is, the reference times may appear periodically at periods equal to each other.

In the method for sending the cell stream provided in the embodiment of the present disclosure, the time value of the Global Clock corresponding to the cell, the occurrence time value of the pulse having the global clock attribute, or the desired value of the time of sending the cell, which serves as the reference time, may be a time value obtained by at least one of: the calibration of the 1588 function supported by the designated device, the GPS clock signal, and the external clock source.

In the method for sending the cell stream provided in the embodiment of the present disclosure, most existing devices support the 1588 function or an external time input function. The IEEE 1588 protocol stands for: a Precision Clock Synchronization Protocol Standard for Networked Measurement and Control Systems, and is a standard protocol for network devices realizing time synchronization. A basic function of the IEEE 1588 protocol is to maintain a synchronization of all clocks in a distributed network with a most accurate clock. An optical fiber delay time between a primary device and a standby device, and a clock difference between such two devices, i.e., the primary device and the standby device, may be tested out by an interaction between the primary device and the standby device through 1588 messages, and the standby device is calibrated based on the clock difference so that a clock of the standby device and a clock of the primary device are synchronized.

In some implementations, time synchronization between all devices in a network may be achieved through the 1588 function, so that an operating time of the network devices is consistent with a time of a reference clock source. For any device without the 1588 function, the device may be provided with a GPS clock source function, so as to provide time information through a GPS clock signal. For any device not having the GPS clock source function, the device may receive a clock signal from an external clock source through an external clock source interface, so as to provide information about the reference time by the external clock source.

In the method for sending the cell stream provided in the embodiment of the present disclosure, after the reference time is obtained according to any of the above methods, the reference cell may be selected according to the reference time. For example, the cell which has a preset sequence number and is desired to be sent at the reference time is taken as the reference cell. In this scenario, there is a fixed time comparison period, and the time comparison period is a comparison period determined according to the reference time obtained any of the above methods and is fixed.

Illustratively, in some implementations of the present disclosure, the appearance period of the reference time may be: an occurrence period of a pulse per second corresponding to the reference time. In a case where the device is provided with a clock synchronization information value for the reference time, the device may provide time synchronization information to all single boards and modules in the device by a pulse per second. The pulse per second is a single pulse signal, and if a pulse occurs, it indicates that the time at which the pulse occurs is exactly a start of a second of the international standard time. If a time calibration is performed, all timing devices worldwide send out a pulse per second simultaneously, and timings of seconds of all the devices are the same and are completely aligned with each other.

In the above implementations, the occurrence period of the pulse per second corresponding to the reference time may be taken as the time comparison period. That is, by taking a pulse per second as a calculation cycle of the time comparison, a time deviation value between an actual time of sending a cell and the reference time at each second is calculated, that is, the time deviation value is calculated per second.

Illustratively, in some implementations of the present disclosure, in addition to calculating the time deviation value per second, the time deviation value may be calculated by taking 100 milliseconds (ms) or 10ms or 1ms as the time comparison period, with a processing principle the same as that with one second as the time comparison period.

In some implementations, the reference time is a desired reference time at which the reference cell appears, and the reference cell is the cell which has the preset sequence number and is selected in advance from the designated device.

In some implementations, the operation S810 may include following operations S14 and S15: S14, taking a desired appearance period of the desired reference time of the reference cell as the time comparison period; and S15, detecting the time deviation value between the actual time of sending the reference cell and the reference time (i.e., the desired reference time) of the reference cell in each time comparison period.

Through the operations S14 and S15, the reference time may be determined according to the reference cell, i.e., according to the selected reference cell, the reference time is the desired reference time at which the reference cell appears, and the actual time of sending the reference cell may be aligned with the desired reference time. For example, the cell with the sequence number of 0 (cell 0 for short) may be determined as the reference cell, and then the desired reference time of the cell 0 may be determined as the reference time to be actually used. In this scenario, the actual time of sending the cell 0 may be uncertain or may be not fixed, such that a time of performing a time comparison between the actual time of sending the cell 0 and the reference time may be uncertain or may be not fixed. However, the desired appearance period of the cell 0 is fixed, and the time comparison period is calculated according to the desired appearance period, so that the time comparison period is fixed, and if the code blocks are inserted according to the time deviation value, the insertion is performed according to the fixed time comparison period.

As can be seen from the above, two methods are provided for detecting the time deviation value between the actual time of sending the cell in the designated device and the reference time. The first method is to select, at a time of the reference time appearing, the cell with the preset sequence number as the reference cell to be subjected to the time comparison, and compare the actual time of sending the reference cell with the reference time to obtain the deviation value between the actual time of sending the reference cell and the reference time; and the second method is to determine, at a time of the reference cell appearing, the actual time of sending the reference cell and the reference time (i.e., the desired reference time) corresponding to the reference cell, and detect to obtain the deviation value between the reference time (i.e., the desired reference time) of the reference cell and the actual time of sending the reference cell.

Moreover, as can be seen from the above, the method for sending the cell stream provided in the embodiment of the present disclosure provides different methods for implementing the time comparison period. For example, the time comparison period may be determined according to the appearance period of the reference time, e.g., according to the pulse per second corresponding to the reference time. For example, the time deviation value between the actual time of sending the cell and the reference time may be calculated according to a time comparison period, such as 100ms or 10ms or 1ms, defined by a user. For example, the reference cell may be determined first, and the desired appearance period of the reference cell may be taken as the time comparison period.

In actual application scenarios, the different methods for determining the time comparison period may be flexibly selected as desired, and the implementation method for detecting the time deviation value between the actual time of sending the reference cell and the reference time may be selected according to the time comparison period, which will not be specifically limited herein.

In some implementations, if the number of appearances of the cell with the preset sequence number in the time comparison period is greater than 1, the operation S11 may include following operation S21: S21, selecting the cell which has the preset sequence number and is associated with the reference time as the reference cell from the designated device; and any two reference cells adjacent to each other are spaced apart by N cells with the preset sequence number, and N is the number of appearances of the cell with the preset sequence number in the time comparison period.

In the above implementations, during the time comparison being performed, the number of reference cells in the time comparison period is to be considered; and if the reference cell appears for may times in the time comparison period, merely the cells associated with the reference time are selected to participate in the time comparison, so as to improve the accuracy of the time deviation value detected in the time comparison period.

For example, if the cell with the sequence number of 0 is selected for the time comparison, the cell 0 may appear for 1000 times in one time comparison period, that is, there are 1000 cells with the sequence number of 0 in the comparison period, but the reference time appears merely once in the comparison period, and in this case, during a comparison module performing the time comparison, merely the cell 0 associated with the reference time is selected for the time comparison, and any two selected cells 0 adjacent to each other are spaced apart by 1000 cells with the preset sequence number. For example, the cell 0 appearing for the 1000^{th} time, the cell 0 appearing for the 2000^{th} time, the cell 0 appearing for the 3000^{th} time, and so on are selected. Merely the cells 0 associated with the reference time are selected for the time comparison with the reference time, and the other cells with the sequence number 0 do not participate in the time comparison.

For example, if the cell with the sequence number of 0 is selected for the time comparison, the cell 0 may appear for 800 times in one time comparison period, that is, there are 800 cells with the sequence number of 0 in the comparison period, but the reference time appears merely once in the comparison period, and in this case, during the comparison module performing the time comparison, merely the cell 0 associated with the reference time is selected for the time comparison, and any two selected cells 0 adjacent to each other are spaced apart by 800 cells with the preset sequence number. For example, the cell 0 appearing for the 800^{th} time, the cell 0 appearing for the 1600^{th} time, the cell 0 appearing for the 2400^{th} time, and so on are selected. Merely the cells 0 associated with the reference time are selected for the time comparison with the reference time, and the other cells with the sequence number 0 do not participate in the time comparison.

In the method for sending the cell stream provided in the embodiment of the present disclosure, the time comparison period may be understood as a time period of performing the time comparison, and the time deviation value may be output periodically by performing the time comparison periodically, so as to periodically calculate the number of code blocks corresponding to the time deviation value, periodically control the designated device to insert the code blocks of the preset type into the cell stream to be sent according to the calculated number of code blocks, thereby realizing a periodic adjustment on the actual time of sending the cell in the cell stream.

In some implementations, the time deviation value is a time deviation value detected in each predetermined time comparison period; and the operation S830 may include an operation S31: S31, sending an insertion instruction signal to the designated device, so as to control the designated device according to the insertion instruction signal to evenly insert the code blocks of the preset type in the cell stream to be sent according to the calculated number of code blocks in each time comparison period.

In the above implementations, after the total number of code blocks to be inserted in the time comparison period is calculated according to the time deviation value, the insertion instruction signal may be provided to the designated device, and the designated device may be controlled through the insertion instruction signal to evenly distribute insertion opportunities in the time comparison period, so as to evenly insert the code blocks of the preset type into the cell stream sent by the designated device according to the total number of code blocks to be inserted.

In some implementations, the operation S31 may include operation S41: S41, sending a first insertion instruction signal to the designated device; and the first insertion instruction signal is configured to indicate the time comparison period and the calculated number of code blocks, so as to enable the designated device to determine, according to the time comparison period and the calculated number of code blocks, insertion positions of code blocks to be evenly distributed in each comparison period and a total number of code blocks to be evenly distributed at each insertion position.

In the above implementations, the time comparison period and the number of code blocks corresponding to the time deviation value may be sent to the designated device through the first insertion instruction signal, so that the designated device may automatically insert the code blocks of the preset type into the cell stream to be sent evenly in the time comparison period according to the time comparison period and the number of code blocks, that is, the designated device automatically determines, according to the time comparison period and the number of code blocks, the positions in the cell stream to be sent, at which the code blocks of the preset type are evenly distributed and inserted.

In some implementations, the operation S31 may include following operations S51 and S52: S51, according to the number of code blocks to be inserted in each time comparison period, setting insertion positions of code blocks to be evenly distributed in each comparison period and a total number of code blocks to be evenly distributed and inserted at each insertion position; and S52, at each of the insertion positions evenly distributed, sending a second insertion instruction signal to the designated device; and each second insertion instruction signal is configured to indicate the total number of code blocks to be evenly distributed and inserted at each current insertion position.

In the above implementations, the insertion positions evenly distributed in the comparison period and the total number of code blocks to be evenly distributed and inserted at each insertion position are calculated in advance; and at each of the insertion positions evenly distributed, the second insertion instruction signal is sent to the designated device to instruct the designated device to perform code block insertion at a current time and to insert the code blocks according to the pre-calculated number of code blocks to be evenly distributed and inserted, thereby achieving evenly inserting the code blocks of the preset type into the cell stream sent by the designated device according to the number of code blocks corresponding to the time deviation value.

In the method for sending the cell stream provided in the embodiment of the present disclosure, a cell sending module of the designated device may be configured to send the cells, insert the specific code blocks between the cells after receiving the insertion instruction signal, and adjust the time of sending the cell to align the time of sending the cell with the reference time.

Still taking the reference cell being the cell 0 as an example, after the time of sending the cell 0 is aligned with the reference time, since all the cells are sent in sequence and the specific code blocks inserted between the cells are evenly distributed, the cells such as a cell 1, a cell 2, and a cell 3 following the cell 0 are certainly sent and output at corresponding fixed times. All reference times in the network are based on the international standard time and thus appear at a same time, and thus, if times of sending the reference cells in all devices are aligned with the reference times, the cells of all the devices are sent at the same time, thus enabling the cells to have a same transmitting speed and aligned transmitting phases. After the cells sent by all the device have the same transmitting speed and the aligned transmitting phases, for any device, the cell received by a receiving port and the cell sent by a transmitting port have constant relative phase positions and reach a co-speed and co-phase state, so that the delay time of the cells can be reduced.

In some implementations, the number of code blocks corresponding to the time deviation value includes a base number of code blocks to be inserted and a correction number of code blocks to be inserted; and the operation S820 may include following operations S61 to S63: S61, acquiring the base number of code blocks to be inserted, which is calculated in advance according to a preset desired frequency deviation adaptation value between different devices, by the designated device in each preset time comparison period; S62, taking the number of code blocks corresponding to the time deviation value in each time comparison period as the correction number of code blocks to be inserted by the designated device in each time comparison period; and S63, calculating a sum of the base number of code blocks to be inserted in each time comparison period and the correction number of code blocks to be inserted in each time comparison period to obtain the number of code blocks, corresponding to the time deviation value, to be inserted by the designated device in each time comparison period.

Through the operations S61 to S63, the base number of code blocks to be inserted in each time comparison period is calculated according to the desired frequency deviation adaptation value between the devices, and the correction number of code blocks to be inserted in each time comparison period is calculated according to the time deviation value. Thus, in each time comparison period, on the basis that the number of code blocks to be inserted is equal to the base number of code blocks to be inserted, the total number of code blocks to be inserted may be adjusted according to the correction number of code blocks to be inserted, thereby meeting the desired frequency deviation adaptation value between different devices and improving the efficiency of calculation.

In the method for sending the cell stream provided in the embodiment of the present disclosure, the cell is a basic unit with a fixed length and a fixed format feature, and includes a Fine Grain Base Unit defined by a standard of a mobile communication operator.

It should be noted that the cell in the embodiment of the present disclosure includes, but is not limited to, the Fine Grain Base Unit defined by the standard of the mobile communication operator. In actual application scenarios, a Fine Grain Base Unit defined as desired by an actual service may be used as the cell, and a Fine Grain Base Unit defined by a standard of any other communication operator may also be used as the cell, which is not specifically limited herein. For the sake of simplifying the description, processes of calculating and updating the base number of code blocks to be inserted are illustrated below by taking the Fine Grain Base Unit defined by the standard of the mobile communication operator as an example, but the following description should not be interpreted as limiting the scope or feasible implementations of the present disclosure, and a method of processing the Fine Grain Base Unit defined by the standard other than the standard of the mobile communication operator or the Fine Grain Base Unit defined in any other way is the same as the method of processing the Fine Grain Base Unit defined by the standard of the mobile communication operator.

In some implementations, the method for sending the cell stream may include following operations S71 to S75 before the operation S61.

In S71, according to a communication bandwidth used by the designated device, a preset number of slots, and a total number of units for measuring an amount of information included in one code block, a total number of code blocks contained in a unit time duration in one slot in the communication bandwidth is calculated; and the unit time duration is a time duration corresponding to the time comparison period.

Taking a case where the unit time duration is equal to one second and a length of the cell determined in a fine grain slicing technical standard of a mobile communication operator enterprise is equal to 197 66-bit code blocks as an example, if the Fine Grain Base Unit is carried in one or more slots at a 5G (the Fifth Generation Wireless Systems) speed (bit/s) under a FlexE protocol, taking the Fine Grain Base Unit carried in one slot at the 5G speed as an example, a bandwidth of a 100GE Ethernet is 103.125G, and there are (103.125G/20)/66=78125000 66-bit code blocks in one 5G slot per second.

In S72, a ratio of the number of code blocks contained in the unit time duration to a preset desired frequency deviation adaptation value is calculated to obtain the minimum value of the number of idle blocks desired in the unit time duration, and the number of code blocks for the cells (the Fine Grain Base Units) in the unit time duration is obtained by performing a calculation according to the number of code blocks contained in the unit time duration and the minimum value of the number of idle blocks.

For example, according to the desired frequency deviation adaptation value of 200PPM, at least 78125000*200PPM=15625 code blocks in the 78125000 code blocks in one second are desired to be the idle blocks (the idle blocks may be referred to as IDLE blocks, I blocks, or idle code blocks, for example); by increasing or reducing the number of idle blocks, an adjustment on a speed of the code block stream is realized to adapt to the desired frequency deviation adaptation value of 200PPM between different devices; thus, in the unit time duration of one second in one slot in the communication bandwidth preset, there are at most 78125000-15625=78109375 code blocks to be used for the Fine Grain Base Units.

In S73, the number of code blocks for the cells (the Fine Grain Base Units) in the unit time duration is first divided by the number of code blocks forming each cell, and is then divided by the number of cells forming one multiframe, to obtain a result value, and an integer value of the obtained result value is taken as the number of multiframes of cells (the Fine Grain Base Units) to be transferred in the unit time duration.

For example, the length of each cell (Fine Grain Base Unit) determined in the fine grain slicing technical standard of the mobile communication operator enterprise is equal to 197 66-bit code blocks, and 20 cells (Fine Grain Base Units) form one multiframe, and thus the number of multiframes of Fine Grain Base Units to be transferred in the unit time duration of one second is equal to (78109375/197)/20=19824.71, that is, 19824 fine grain multiframes may be sent in one second.

In S74, the number of multiframes to be transferred in the unit time duration is multiplied by the number of code blocks forming each cell and the number of cells forming one multiframe, to obtain the number of code blocks to be occupied by the multiframes to be transferred in the unit time duration.

For example, if it is obtained by the calculation in the operation S73 that 19824 fine grain multiframes may be sent in one second, 19824 fine grain multiframes occupy 19824* 197*20=78106560 66-bit code blocks.

In S75, a difference between the number of code blocks contained in the unit time duration and the number of code blocks to be occupied by the multiframes to be transferred in the unit time duration is calculated to obtain the base number of code clocks to be inserted by the designated device in each time comparison period.

For example, it is obtained by the calculation in the operation S74 that the number of code blocks to be occupied by the multiframes to be transferred in the unit time duration of one second is 78106560 66-bit code blocks, the number of the remaining code blocks (e.g., the idle code blocks) in the unit time duration of one second is equal to 78125000-78106560=18440, that is, the base number of code blocks to be inserted, obtained by the calculation is equal to 18440.

Through the operations S71 to S75, the base number of code blocks to be inserted by the designated device in each preset time comparison period may be calculated according to the preset desired frequency deviation adaptation value between different devices.

It should be understood that the values for the calculation, such as the unit time duration, the desired frequency deviation adaptation value, the type of the network applied, the network bandwidth, the length of the cell determined in the fine grain slicing technical standard of the communication operator enterprise, the number of code blocks forming each cell, the number of cells forming one multiframe, all may be determined according to actual application scenarios, which is not specifically limited herein.

Illustratively, according to the above calculation result of the base number of code blocks to be inserted, 18440 idle code blocks are evenly inserted between the Fine Grain Base Units in the unit time duration of one second during the transmitting port of the designated device sending the Fine Grain Base Units (there are 19824 multiframes of Fine Grain Base Units in one second, that is, there are 19824*20=396480 Fine Grain Base Units in total in one second, and one idle code block is inserted into every 21 Fine Grain Base Units on average), thereby enabling the number of idle code blocks in the code block stream to meet a desired increase or decrease of 200PPM.

If the time of sending the Fine Grain Base Unit is consistent with the reference time, the time deviation value is 0, and thus a code block insertion module sends the insertion instruction signal according to the frequency of evenly inserting 18440 idle code blocks in one second (the 18440 idle code blocks are called the base number of code blocks to be inserted). If a time comparison module informs that a time of currently sending the Fine Grain Base Unit is earlier than the reference time, the corresponding number of code blocks is calculated according to a time difference of ahead of time, for example, the time difference of ahead of time is equivalent to 8 code blocks (the 8 code blocks are called the correction number of code blocks to be inserted), the code block insertion module evenly inserts 18448 (i.e., 18440+8) idle code blocks in one time comparison period and sends out the insertion instruction signal. If the time of currently sending the Fine Grain Base Unit is later than the reference time, the corresponding number of the code blocks is calculated according to a time difference which is late, for example, the time difference which is late is equivalent to 5 code blocks, the code block insertion module sends out the insertion instruction signal indicating a frequency of evenly inserting 18435 (i.e., 18440-5) idle code blocks in one time comparison period.

In some implementations, if the time deviation value is detected in each time comparison period within a preset time duration, after the operation S63, the method for sending the cell stream further includes following operations S64 and S65: S64, taking the number of code blocks, corresponding to the time deviation value, to be inserted by the designated device in each time comparison period as a final number of code blocks to be inserted by the designated device in each time comparison period, and acquiring a plurality of consecutive final numbers of code blocks to be inserted within the preset time duration; and S65, taking an average of the plurality of consecutive final numbers of code blocks to be inserted as a new base number of code blocks to be inserted, or taking a weighted average of the plurality of consecutive final numbers of code blocks to be inserted as the new base number of code blocks to be inserted.

Through the operations S64 and S65, the base number of code blocks to be inserted may be corrected, thereby improving the accuracy of the number of code blocks corresponding to the time deviation value.

In the method for sending the cell stream provided in the embodiment of the present disclosure, if the time deviation value is detected merely once in the preset time duration and no time deviation value has appeared before, an adjustment on the code blocks to be inserted is performed merely once according to the correction number of code blocks to be inserted, that is, the code blocks of the preset type are evenly distributed and inserted in the cell stream to be sent according to the calculated number of code blocks, corresponding to the time deviation value, to be inserted by the designated device in the time comparison period. If the time deviation value is detected once every time in the preset time duration, which indicates that the original base number of code blocks to be inserted is not reasonable, the base number of code blocks to be inserted (e.g., the base number 18440 of code blocks to be inserted described above) may be revised.

In some implementations, a method for revising the base number of code blocks to be inserted may include: taking the sum of the base number of code blocks to be inserted and the correction number of code blocks to be inserted as the calculated final number of code blocks to be inserted; and taking the average of the plurality of consecutive final numbers of code blocks to be inserted as the new base number of code blocks to be inserted, or taking the weighted average of the plurality of consecutive final numbers of code blocks to be inserted as the new base number of code blocks to be inserted. In the method for sending the cell stream provided in the embodiment of the present disclosure, if the base number of code blocks to be inserted is revised to an appropriate value, the time deviation value is 0 for most of the time, and synchronization between the time of sending the Fine Grain Base Unit and the reference time can be realized. Thus, the number of times of inserting the code blocks of the preset type into the cell stream to be sent can be reduced, and the efficiency of adjusting the actual time of sending the cell stream is improved.

In the method for sending the cell stream provided in the embodiment of the present disclosure, in the aforesaid examples, by taking a case where 19824 multiframes of Fine Grain Base Units may be sent in the unit time duration of one second, the number of idle code blocks is equal to 18440, which just meets the desired frequency deviation adjustment of 200PPM, and there is no extra margin in a range of a frequency deviation to be adjusted.

In practical applications, if the range of the frequency deviation to be adjusted goes beyond 200PPM and a margin is desired to be reserved for the range of the frequency deviation to be adjusted, the base number of code blocks to be inserted is to be recalculated.

In some implementations, if the desired frequency deviation adaptation value desires the margin to be reserved for the range of the frequency deviation to be adjusted, after the operation S61, the method for sending the cell stream further includes following operations S81 to S84.

In S81, the number of multiframes of cells to be transferred in the unit time duration is determined according to the margin desired to be reserved.

In S82, the number of multiframes of cells to be transferred in the unit time duration is multiplied by the number of code blocks forming each cell and the number of cells forming one multiframe, to obtain the number of code blocks to be occupied by the multiframes of cells to be transferred in the unit time duration.

As an example, if multiframes containing 19820 (greater than 18440) cells are to be sent in the unit time duration of one second, the multiframes containing 19820 cells occupy 19820*197*20=78090800 66-bit code blocks.

In S83, a difference between the number of code blocks contained in the unit time duration and the number of code blocks to be occupied by the multiframes of cells to be transferred in the unit time duration is calculated to obtain an updated value of the base number of code blocks to be inserted by the designated device in each time comparison period.

As an example, the number of code blocks contained in the unit time duration is 78125000, the number of code blocks to be occupied by the multiframes of cells to be transferred in the unit time duration is 78090800, and the difference therebetween is 34200. That is, the total number of the remaining code blocks (such as the idle code blocks) in the unit time duration except for the multiframes of 19820 Fine Grain Base Units is 78125000-78090800=34200. This number of code blocks (i.e., 34200) may meet at most a range of 437.76PPM of a frequency deviation to be adjusted.

In S84, the updated value of the base number of code blocks to be inserted is taken as the new base number of code blocks to be inserted.

In this operation, the calculated update value of the base number of code blocks to be inserted by the designated device in each time comparison period is taken as an actual base number of code blocks to be inserted. For example, the number of code blocks of 34200 obtained in the above operation is taken as an initial base number of code blocks to be inserted.

As an example, in practical implementations, the base number of code blocks to be inserted may be other values. For example, if the unit time duration is one second and the multiframes of 19810 Fine Grain Base Units may be sent in one second, then the initial base number of code blocks to be inserted is equal to 73600, which can meet at most a range of 942.08PPM of a frequency deviation to be adjusted; and if the multiframes of 19800 Fine Grain Base Units may be sent in one second, the initial base number of code blocks to be inserted is equal to 113000, which can meet at most a range of 1446.4PPM of a frequency deviation to be adjusted.

Through the operations S81 to S84, the base number of code blocks to be inserted may be obtained by performing a calculation according to the margin desired to be reserved for the range of the frequency deviation to be adjusted, so as to enable the base number of code blocks to be inserted in the process of sending the cell stream to meet the desired margin to be reserved for the range of the frequency deviation to be adjusted in actual application scenarios.

In some implementations, in a case where a fluctuation of the reference time occurs, before the operation S810, the method for sending the cell stream further includes following operations S91 and S92: S91, taking the reference time before the fluctuation occurs as a first time, and determining a fluctuation direction and a fluctuation value of the first time; and S92, in a direction opposite to the fluctuation direction, adjusting the current reference time (i.e., after the fluctuation occurs) by a specified time calibration value every time until the current reference time is equal to the first time; and the specified time calibration value is less than or equal to a preset time duration value.

In practical applications, in a case where the reference time is provided through the calibration of the 1588 function supported by the designated device, since a time value of a 1588 module is obtained by the calibration, the reference time may fluctuate during a process of the calibration; and in a case where the reference time is provided by the GPS clock signal or the external clock source, if a time value provided by the GPS clock signal or the external clock source fluctuates, the reference time also fluctuates.

In a case where the reference time fluctuates, through the operations S91 and S92, the reference time is adjusted every time by the time calibration value less than or equal to the preset time duration value, so that smooth filtering on the reference time is realized, and the reference time is moved smoothly and slowly, thereby avoiding an adverse effect caused by a relatively great fluctuation occurring in the process of calculating the time deviation value through the time comparison during detecting the time deviation value between the actual time of sending the cell in the designated device and the reference time.

According to the method for sending the cell stream provided in the embodiment of the present disclosure, the time deviation value between the actual time of sending the cell in the designated device and the reference time is detected, the number of code blocks to be inserted, which is matched with the time deviation value, is calculated, and the designated device is controlled to insert the specific code blocks between the cells to be sent according to the calculated number of code blocks to be inserted during sending the cells, so that the actual time of sending the cell is adjusted to the reference time, and the adjustment on the transmitting speeds and the transmiting phases of the cells is realized, thereby realizing speed synchronization between the cells, enabling phase positions of the cells to be constant and stable, enabling the cells to be in a co-speed and co-phase state, and reducing the delay time of the cells.

An apparatus for sending a cell stream according to an embodiment of the present disclosure will be described in detail below with reference to the drawings. FIG. 9 is a schematic structural diagram of an apparatus for sending a cell stream according to an embodiment of the present disclosure. As shown in FIG. 9, an apparatus 900 for sending a cell stream may include a time detection module 910, a code block calculation module 920, and a code block insertion module 930.

The time detection module 910 is configured to detect a time deviation value between an actual time of sending a cell in a designated device and a reference time.

The code block calculation module 920 is configured to calculate the number of code blocks corresponding to the time deviation value.

The code block insertion module 930 is configured to control the designated device to insert code blocks of a preset type into the cell stream to be sent according to the calculated number of code blocks, so as to adjust the actual time of sending the cell in the designated device to the reference time.

According to the apparatus for sending the cell stream provided in the embodiment of the present disclosure, the time deviation value between the actual time of sending the cell in the designated device and the reference time is detected, the number of code blocks to be inserted, which is matched with the time deviation value, is calculated, and the designated device is controlled to insert specific code blocks between the cells to be sent according to the calculated number of code blocks to be inserted during sending the cells, so that the actual time of sending the cell is adjusted to the reference time, and the adjustment on transmitting speeds and transmitting phases of the cells is realized, thereby realizing speed synchronization between the cells, enabling phase positions of the cells to be constant and stable, enabling the cells to be in a co-speed and co-phase state, and reducing the delay time of the cells.

In some implementations, the time detection module 910 may include: a reference-cell selection unit configured to select, according to the reference time, a cell with a preset sequence number in the designated device as a reference cell to be subjected to a time comparison; and a comparison period determination unit configured to determine a time comparison period according to the reference time, the time detection module 910 is further configured to detect, in each time comparison period, the time deviation value between an actual time of sending a reference cell and the reference time.

In some implementations, the reference time is a desired reference time every time the reference cell appears, and the reference cell is a cell which has a preset sequence number and is selected in advance from the designated device. The time detection module 910 may include: a comparison period determination unit configured to take a desired appearance period of the desired reference time of the reference cell as the time comparison period, the time detection module 910 is further configured to detect, in each time comparison period, the time deviation value between an actual time of sending the reference cell and the reference time (i.e., the desired reference time) of the reference cell.

In some implementations, the reference time includes any one of following time values obtained by a preset time acquisition method: a time value of a Global Clock corresponding to the cell, an occurrence time value of a pulse having a global clock attribute, or a desired value the time of sending the cell. The time comparison period is a time duration between two consecutive reference times. The preset time acquisition method includes using any one of: a calibration of a 1588 function supported by the designated device, a GPS clock signal, and an external clock source.

In some implementations, if the number of appearances of the cell with the preset sequence number in the time comparison period is greater than 1, the reference-cell selection unit is further configured to select the cell which has the preset sequence number and is associated with the reference time as the reference cell from the designated device; and any two reference cells adjacent to each other are spaced apart by N cells with the preset sequence number, and N is the number of appearances of the cell with the preset sequence number in the time comparison period.

In some implementations, the time deviation value is a time deviation value detected in each preset time comparison period. The code block insertion module 930 includes: a signal sending unit configured to send an insertion instruction signal to the designated device, so as to control the designated device according to the insertion instruction signal to evenly insert the code blocks of the preset type in the cell stream to be sent according to the calculated number of code blocks to be inserted in each time comparison period.

In some implementations, the signal sending unit includes a first signal sending subunit configured to send a first insertion instruction signal to the designated device; and the first insertion instruction signal is configured to indicate the time comparison period and the number of code blocks to be inserted, so as to enable the designated device to determine, according to the time comparison period and the number of code blocks to be inserted, insertion positions of code blocks to be evenly distributed in each comparison period and a total number of code blocks to be evenly distributed at each insertion position.

In some implementations, the signal sending unit includes a second signal sending subunit configured to set, according to the number of code blocks to be inserted in each time comparison period, insertion positions of code blocks to be evenly distributed in each comparison period and a total number of code blocks to be evenly distributed and inserted at each insertion position, and send, at each of the insertion positions evenly distributed, a second insertion instruction signal to the designated device; and each second insertion instruction signal is configured to indicate the number of code blocks to be evenly distributed and inserted at each current insertion position.

In some implementations, the number of code blocks to be inserted includes a base number of code blocks to be inserted and a correction number of code blocks to be inserted. The code block calculation module 920 includes: a base number calculation unit configured to acquire the base number of code blocks, which is calculated in advance according to a preset desired frequency deviation adaptation value between different devices, to be inserted by the designated device in each preset time comparison period; and a correction number calculation unit configured to take the number of code blocks corresponding to the time deviation value in each time comparison period as the correction number of code blocks to be inserted by the designated device in each time comparison period. The code block calculation module 920 is further configured to calculate a sum of the base number of code blcoks to be inserted in each time comparison period and the correction number of code blocks to be inserted in each time comparison period to obtain the number of code blocks, corresponding to the time deviation value, to be inserted by the designated device in each time comparison period.

In some implementations, the base number calculation unit is configured to perform, before acquiring the base number of code blocks, which is calculated in advance according to the preset desired frequency deviation adaptation value between different devices, to be inserted by the designated device in each predetermined time comparison period, following operations: according to a communication bandwidth used by the designated device, a preset number of slots, and a total number of units for measuring an amount of information included in one code block, calculating the number of code blocks contained in a unit time duration in one slot in the communication bandwidth, with the unit time duration being a time duration corresponding to the time comparison period; calculating a ratio of the number of code blocks contained in the unit time duration to the preset desired frequency deviation adaptation value to obtain the minimum value of the number of idle blocks desired in the unit time duration, and performing a calculation according to the number of code blocks contained in the unit time duration and the minimum value of the number of idle blocks to obtain the number of code blocks for the cells in the unit time duration; dividing the number of code blocks for the cells in the unit time duration first by the number of code blocks forming each cell and then by the number of cells forming one multiframe to obtain a result value, and taking an integer value of the result value as the number of multiframes of cells to be transferred in the unit time duration; multiplying the number of multiframes to be transferred in the unit time duration by the number of code blocks forming each cell and the number of cells forming one multiframe to obtain the number of code blocks to be occupied by the multiframes to be transferred in the unit time duration; and calculating a difference between the number of code blocks contained in the unit time duration and the number of code blocks to be occupied by the multiframes to be transferred in the unit time duration to obtain the base number of code blocks to be inserted by the designated device in each time comparison period.

In some implementations, if the time deviation value is detected in each time comparison period within a preset time duration, the code block calculation module 920 is further configured to perform, after obtaining the number of code blocks, corresponding to the time deviation value, to be inserted by the designated device in each time comparison period, following operations: taking the number of code blocks, corresponding to the time deviation value, to be inserted by the designated device in each time comparison period as a final number of code blocks to be inserted by the designated device in each time comparison period, and acquiring a plurality of consecutive final numbers of code blocks to be inserted within the preset time duration; and taking an average of the plurality of consecutive final numbers of code blocks to be inserted as a new base number of code blocks to be inserted, or taking a weighted average of the plurality of consecutive final numbers of code blocks to be inserted as the new base number of code blocks to be inserted.

In some implementations, if the desired frequency deviation adaptation value desires a margin to be reserved for a range of a frequency deviation to be adjusted, the base number calculation unit is further configured to perform, after acquiring the base number of code blocks, which is calculated in advance according to the preset desired frequency deviation adaptation value between different devices, to be inserted by the designated device in each time comparison period, following operations: determining the number of multiframes of cells to be transferred in the unit time duration according to the margin desired to be reserved; multiplying the number of multiframes of cells to be transferred in the unit time duration by the number of code blocks forming each cell and the number of cells forming one multiframe to obtain the number of code blocks to be occupied by the multiframes of the cells to be transferred in the unit time duration; calculating a difference between the number of code blocks contained in the unit time duration and the number of code blocks to be occupied by the multiframes of the cells to be transferred in the unit time duration to obtain an updated value of the base number of code blocks to be inserted by the designated device in each time comparison period; and taking the updated value of the base number of code blocks to be inserted as the new base number of code blcoks to be inserted.

In some implementations, the reference time is the time value obtained by the calibration of the 1588 function supported by the designated device. In a case where a fluctuation of the reference time occurs, the apparatus for sending the cell stream further includes: a fluctuation information acquisition module configured to perform, before detecting the time deviation value between the actual time of sending the cell in the designated device and the reference time, following operations: taking the reference time before the fluctuation occurs as a first time, and determining a fluctuation direction and a fluctuation value of the first time; and a reference-time calibration module configured to adjust, in a direction opposite to the fluctuation direction, the current reference time (i.e., after the fluctuation occurs) by a specified time calibration value every time until the current reference time is equal to the first time, with the specified time calibration value being less than or equal to a preset time duration value.

According to the apparatus for sending the cell stream provided in the embodiment of the present disclosure, after the time deviation value between the actual time of sending the cell in the designated device and the reference time is detected, the number of code blocks to be inserted is calculated according to the time deviation value, and the designated device sending the cells is controlled to insert the specific code blocks between the cells to be sent according to the calculated number of code blocks to be inserted to adjust the actual time of sending the cell to the reference time, so as to realize the adjustment on the transmitting speeds and the transmitting phases of the cells, thereby realizing speed synchronization between the cells, enabling phase positions of the cells to be constant and stable, enabling the cells to be in a co-speed and co-phase state, and reducing the delay time of the cells.

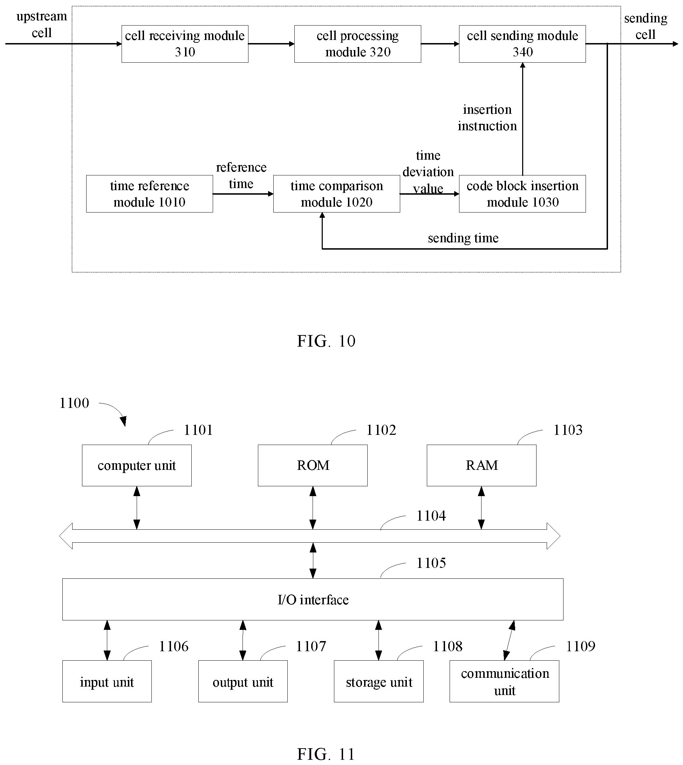

FIG. 10 is a schematic structural diagram of an apparatus for sending a cell stream according to an embodiment of the present disclosure. The same or equivalent structures in FIG. 10 and FIG. 3 are denoted by the same reference numerals. As shown in FIG. 10, in some implementations, the designated device may include: a cell receiving module 310, a cell processing module 320, and a cell sending module 340. The apparatus for sending the cell stream according to the embodiment of the present disclosure may further include: a time reference module 1010, a time comparison module 1020, and a code block insertion module 1030.

The time reference module 1010 is configured to provide a reference time; the time comparison module 1020 is configured to compare a time of sending a cell with the reference time to obtain a time deviation value; and the code block insertion module 1030 is configured to calculate the number of code blocks to be inserted according to the time deviation value.

In some implementations, the code block insertion module 1030 may also set insertion positions of code blocks to be evenly distributed in each comparison period and a total number of code blocks to be evenly distributed and inserted at each insertion position, so that the positions at which the code blocks are to be inserted may be evenly distributed, and an insertion instruction signal indicating to insert each code block may be provided.

The cell sending module 340 of the designated device is configured to insert, during sending the cells, specific code blocks between the cells according to the insertion instruction signal to adjust the time of sending the cell.

According to the apparatus for sending the cell stream provided in the embodiment of the present disclosure, the time deviation value between the time of sending the cell in the designated device and the reference time is detected, and the actual time of sending the cell is adjusted to the reference time by inserting the specific code blocks corresponding to the time deviation value between the cells to be sent, so that the objective of sending a cell stream at a fixed time can be achieved, and the adjustment on transmitting speeds and transmitting phases of the cells can be realized.

It should be noted that the present disclosure is not limited to the specific configurations and processes described above or illustrated by the drawings. For convenience and simplicity of description, a detailed description of any known method is omitted herein, and for specific operation processes of the apparatus, modules and units described above, reference may be made to corresponding processes in the above method, which will not be described in detail herein.

The present disclosure further provides a network device and a computer-readable storage medium. FIG. 11 is an exemplary block diagram of an exemplary network device to be configured to implement an embodiment of the present disclosure. The network device is intended to represent various forms of digital computers, such as a laptop, a desktop, a workstation, a personal digital assistant, a server, a blade server, a mainframe, and other appropriate computers. The network device may also represent various forms of mobile devices, such as a personal digital assistant, a cellular telephone, a smart phone, a wearable device, and other similar computer devices. The components, the connection and relationships between the components, and the functions of the components illustrated herein are merely for illustration, and are not intended to limit the implementations of the present disclosure described herein and/or claimed herein.

As shown in FIG. 11, a network device 1100 includes a computer unit 1101 to perform various appropriate actions and processing according to computer programs stored in a Read-Only Memory (ROM) 1102 or computer programs from a Random Access Memory (RAM) 1103 of a storage unit 1108. Various programs and data for the operation of the network device 1100 may be stored in the RAM 1103. The computer unit 1101, the ROM 1102, and the RAM 1103 are connected to each other through a bus 1104. An input/output (I/O) interface 1105 is also connected to the bus 1104. A plurality of components in the network device 1100 are connected to the I/O interface 1105, and include: an input unit 1106 such as a keyboard or a mouse; an output unit 1107 such as various types of displays and speakers; the storage unit 1108 such as a magnetic disk or an optical disc; and a communication unit 1109 such as a network interface card, a modem, or a wireless communication transceiver. The communication unit 1109 allows the network device 1100 to exchange information/data with other devices through a computer network such as the Internet and/or various telecommunication networks.

The computer unit 1101 may be various general processing components and/or special purpose processing components having capabilities of processing and computing. Some examples of the computer unit 1101 include, but are not limited to, a Central Processing Unit (CPU), a Graphics Processing Unit (GPU), various dedicated Artificial Intelligence (AI) computer chips, various computer units running machine learning model algorithms, a Digital Signal Processor (DSP), and any suitable processor, controller and microcontroller. The computer unit 1101 performs the method and processing described above, such as the method for sending the cell stream. For example, in some implementations, the method for sending the cell stream may be implemented as computer software programs tangibly embodied on a machine-readable medium, such as the storage unit 1108. In some implementations, some or all of the computer programs may be loaded and/or installed on the device 1100 via the ROM 1102 and/or the communication unit 1109. After the computer programs are loaded onto the RAM 1103 and executed by the computer unit 1101, one or more operations of the above method for sending the cell stream may be performed. In some implementations, the computer unit 1101 may be configured by any other suitable means (e.g., by means of firmware) to perform the method for sending the cell stream.

Various implementations of the apparatus and techniques described above may be realized in a digital electronic circuit system, an integrated circuit system, a Field Programmable Gate Array (FPGA), an Application Specific Integrated Circuit (ASIC), an Application Specific Standard Product (ASSP), a System on a Chip (SoC), a Complex Programmable Logic Device (CPLD), computer hardware, firmware, software, and/or the combinations thereof. These various implementations may include: the implementations in one or more computer programs that are executable and/or interpretable on a programmable system including at least one programmable processor, and the programmable processor may be a special purpose programmable processor or a general programmable processor, is capable of receiving data and instructions from a storage system, at least one input device, and at least one output device, and capable of transmitting data and instructions to the storage system, the at least one input device, and the at least one output device.

The program codes for implementing the method of the present disclosure may be written in one programming language or any combination of a plurality of programming languages. These program codes may be provided to a processor or a controller of a general computer, a special purpose computer, or other programmable data processing apparatus, such that the program codes, executed by the processor or the controller, causes the functions/operations specified in the flowcharts and/or the block diagrams to be performed by the processor or the controller. The program codes may be executed on a machine totally or partially, or executed as a stand-alone software package partially on the machine and partially on a remote machine or totally on the remote machine or a server.

In the context of the present disclosure, the machine-readable medium may be a tangible medium, and may contain or store programs to be used by or together with an instruction execution system, apparatus or device. The machine-readable medium may be a machine-readable signal medium or a machine-readable storage medium. The machine-readable medium may include, but is not limited to, an electronic system, apparatus or device, a magnetic system, apparatus or device, an optical system, apparatus or device, an electromagnetic system, apparatus or device, an infrared system, apparatus or device, or a semiconductor system, apparatus or device, or any combination thereof. More specific examples of the machine -readable storage medium include an electrical connector having one or more wires, a portable computer disk, a hard disk, a Random Access Memory (RAM), a Read-Only Memory (ROM), an Electrically Erasable Programmable Read-Only Memory (EEPROM), a flash memory, an optical fiber, a portable Compact Disc Read-Only Memory (CD-ROM), an optical storage device, a magnetic storage device, or any suitable combination thereof.

In order to provide interaction with a user, the apparatus and techniques described herein may be implemented on a computer, which is provided with a display device (e.g., a Cathode Ray Tube (CRT) monitor or a Liquid Crystal Display (LCD) monitor) for displaying information to the user; and a keyboard and a pointing device (e.g., a mouse or a trackball) by which the user may provide an input to the computer. Other kinds of devices may also be used to provide the interaction with the user; for example, the feedback provided for the user may be any form of sensory feedback (e.g., visual feedback, auditory feedback, or tactile feedback); and the input from the user may be received in any form (including acoustic input, speech input, or tactile input).

The apparatus and techniques described herein may be implemented in a computer system (e.g., a data server) including a back-end component, or a computer system (e.g., an application server) including a middleware component, or a computer system (e.g., a user computer having a graphical user interface or a web browser, through which the user can interact with the implementations of the apparatus and techniques described herein) including a front-end component, or a computer system including any combination of the back-end component, the middleware component, and the front-end component. The components of the apparatus may be interconnected through digital data communication (e.g., a communication network) in any form or through any medium. Examples of the communication network include: a Local Area Network (LAN), a Wide Area Network (WAN), and the Internet.

The computer system may include a client and a server. The client and the server are generally remote from each other and typically interact with each other through a communication network. The client and the server establish a relationship therebetween by running on respective computers and having computer programs having a client-server relationship.

According to an embodiment of the present disclosure, the present disclosure further provides a computer program product, including a computer program which, executed by a processor, causes the processor to perform the above method for sending the cell stream.

The above description is merely of the exemplary embodiments of the present disclosure, and is not intended to limit the scope of the present disclosure. In general, the various implementations of the present disclosure may be implemented by hardware or special circuits, software, logic or any combination thereof. For example, some aspects of the present disclosure may be implemented by hardware and other aspects may be implemented by firmware or software executable by a controller, a microprocessor or other computing devices, but the present disclosure is not limited thereto.

The embodiments of the present disclosure may be implemented by a data processor of a mobile device executing computer program instructions. For example, the embodiments of the present disclosure are implemented in a processor entity, or by hardware, or by a combination of software and hardware. The computer program instructions may be assembly instructions, Instruction Set Architecture (ISA) instructions, machine instructions, machine-related instructions, microcode, firmware instructions, state setting data, or source code or object code written in one programming language or in any combination of a plurality of programming languages.

A block diagram illustrating any logic flow in the drawings of the present disclosure may show operations of a program, or interconnected logic circuits, modules and functions, or a combination of the operations of the program and the logic circuits, modules and functions. The computer program may be stored on a memory. The memory may be of any type suitable to the local technical environment and may be implemented by using any suitable data storage technology. For example, the memory is, but not limited to, an ROM, an RAM, and an optical storage device and system (a DVD or a Compact Disc (CD)). A computer-readable medium may include a non-transitory storage medium. The data processor may be of any type suitable to the local technical environment. For example, the data processor is, but not limited to, a general-purpose computer, a special purpose computer, a microprocessor, a DSP, an ASIC, an FGPA, and a processor based on multi-core architecture.

The exemplary embodiments of the present disclosure are illustrated in detail above by exemplary and non-limiting examples. For those of ordinary skill in the art, various modifications and adjustments to the above embodiments may be obviously derived from the accompanying drawings and the appended claims, but those modifications and adjustments are not beyond the scope of the present disclosure. Therefore, the proper scope of the present disclosure is defined by the appended claims.

## Claims

1. A method for sending a cell stream, comprising:
detecting a time deviation value between an actual time of sending a cell in a designated device and a reference time;
calculating a total number of code blocks corresponding to the time deviation value; and
controlling the designated device to insert code blocks of a preset type into the cell stream to be sent according to the calculated number of code blocks, so as to adjust the actual time of sending the cell in the designated device to the reference time.

2. The method of claim 1, wherein the detecting a time deviation value between an actual time of sending a cell in a designated device and a reference time comprises:
according to the reference time, selecting a cell with a preset sequence number in the designated device as a reference cell to be subjected to a time comparison;
determining a time comparison period according to the reference time; and
in each time comparison period, perform the time comparison to detect the time deviation value between an actual time of sending the reference cell and the reference time.

3. The method of claim 2, wherein the reference time comprises any one of following time values obtained by a preset time acquisition method: a time value of a Global Clock corresponding to the cell, an occurrence time value of a pulse having a global clock attribute, and a desired value of the time of sending the cell; wherein
the time comparison period is a time duration between two consecutive reference times; and
the preset time acquisition method comprises using any one of: a calibration of a 1588 function supported by the designated device, a Global Positioning System clock signal, or an external clock source.

4. The method of claim 2, wherein in response to that a total number of appearances of the cell with the preset sequence number in the time comparison period is greater than 1, the selecting a cell with a preset sequence number in the designated device as a reference cell to be subjected to a time comparison according to the reference time comprises:
selecting the cell which has the preset sequence number and is associated with the reference time as the reference cell from the designated device;
wherein any two reference cells adjacent to each other are spaced apart by N cells with the preset sequence number, and N is a total number of appearances of the cell with the preset sequence number in the time comparison period.

5. The method of claim 1, wherein the time deviation value is a time deviation value detected in each preset time comparison period; and the controlling the designated device to insert code blocks of a preset type into the cell stream to be sent according to the calculated number of code blocks comprises:
sending an insertion instruction signal to the designated device, so as to control the designated device according to the insertion instruction signal to evenly insert the code blocks of the preset type in the cell stream to be sent according to the calculated number of code blocks to be inserted in each time comparison period.

6. The method of claim 5, wherein the sending an insertion instruction signal to the designated device comprises:
sending a first insertion instruction signal to the designated device; wherein the first insertion instruction signal is configured to indicate the time comparison period and the calculated number of code blocks, so as to enable the designated device to determine, according to the time comparison period and the calculated number of code blocks, insertion positions of code blocks to be evenly distributed in each comparison period and a total number of code blocks to be evenly distributed and inserted at each of the insertion positions.

7. The method of claim 5, wherein the sending an insertion instruction signal to the designated device comprises:
according to the number of code blocks to be inserted in each time comparison period, setting insertion positions of code blocks to be evenly distributed in each comparison period and a total number of code blocks to be evenly distributed and inserted at each of the insertion positions; and
at each of the insertion positions, sending a second insertion instruction signal to the designated device; wherein each second insertion instruction signal is configured to indicate the number of code blocks to be evenly distributed and inserted at any current insertion position.

8. The method of claim 1, wherein the calculated number of code blocks comprises a base number of code blocks to be inserted and a correction number of code blocks to be inserted; and the calculating a total number of code blocks corresponding to the time deviation value comprises:
acquiring the base number of code blocks, which is calculated in advance according to a preset desired frequency deviation adaptation value between different devices, to be inserted by the designated device in each predetermined time comparison period;
taking the number of code blocks corresponding to the time deviation value in each time comparison period as the correction number of code blocks to be inserted by the designated device in each time comparison period; and
calculating a sum of the base number of code blocks to be inserted in each time comparison period and the correction number of code blocks to be inserted in each time comparison period to obtain the number of code blocks, corresponding to the time deviation value, to be inserted by the designated device in each time comparison period.

9. The method of claim 8, further comprising:
before acquiring the base number of code blocks, which is calculated in advance according to the preset desired frequency deviation adaptation value between different devices, to be inserted by the designated device in each predetermined time comparison period, according to a communication bandwidth used by the designated device, a preset number of slots, and a total number of units for measuring an amount of information included in one code block, calculating a total number of code blocks contained in a unit time duration in one slot in the communication bandwidth, with the unit time duration being a time duration corresponding to the time comparison period;
calculating a ratio of the number of code blocks contained in the unit time duration to the preset desired frequency deviation adaptation value to obtain a minimum value of a total number of idle blocks desired in the unit time duration, and performing a calculation according to the number of code blocks contained in the unit time duration and the minimum value of the number of idle blocks to obtain a total number of code blocks for cells in the unit time duration;
dividing the number of code blocks for the cells in the unit time duration first by a total number of code blocks forming each cell and then by a total number of cells forming one multiframe to obtain a result value, and taking an integer value of the result value as a total number of multiframes of cells to be transferred in the unit time duration;
multiplying the number of multiframes to be transferred in the unit time duration by the number of code blocks forming each cell and the number of cells forming one multiframe to obtain a total number of code blocks to be occupied by the multiframes to be transferred in the unit time duration; and
calculating a difference between the number of code blocks contained in the unit time duration and the number of code blocks to be occupied by the multiframes to be transferred in the unit time duration to obtain the base number of code blocks to be inserted by the designated device in each time comparison period.

10. The method of claim 8, wherein, in response to that the time deviation value is detected in each time comparison period within a preset time duration, the method further comprises:
after obtaining the number of code blocks, corresponding to the time deviation value, to be inserted by the designated device in each time comparison period, taking the number of code blocks, corresponding to the time deviation value, to be inserted by the designated device in each time comparison period as a final number of code blocks to be inserted by the designated device in each time comparison period, and acquiring a plurality of consecutive final numbers of code blocks to be inserted within the preset time duration; and
taking an average of the plurality of consecutive final numbers of code blocks to be inserted as a new base number of code blocks to be inserted, or taking a weighted average of the plurality of consecutive final numbers of code blocks to be inserted as the new base number of code blocks to be inserted.

11. The method of claim 8, wherein, in response to that the desired frequency deviation adaptation value desires a margin to be reserved for a range of a frequency deviation to be adjusted, the method further comprises:
after acquiring the base number of code blocks, which is calculated in advance according to the preset desired frequency deviation adaptation value between different devices, to be inserted by the designated device in each predetermined time comparison period, determining a total number of multiframes of cells to be transferred in a unit time duration according to the margin desired to be reserved;
multiplying the number of multiframes of cells to be transferred in the unit time duration by a total number of code blocks forming each cell and a total number of cells forming one multiframe to obtain a total number of code blocks to be occupied by the multiframes of cells to be transferred in the unit time duration;
calculating a difference between a total number of code blocks contained in the unit time duration and the number of code blocks to be occupied by the multiframes of cells to be transferred in the unit time duration to obtain an updated value of the base number of code blocks to be inserted by the designated device in each time comparison period; and
taking the updated value of the base number of code blocks to be inserted as a new base number of code blocks to be inserted.

12. The method of any one of claims 1 to 11, wherein, in response to that a fluctuation of the reference time occurs, before detecting the time deviation value between the actual time of sending the cell in the designated device and the reference time, the method further comprises:
taking the reference time before the fluctuation occurs as a first time, and determining a fluctuation direction and a fluctuation value of the first time; and
in a direction opposite to the fluctuation direction, adjusting a current reference time by a specified time calibration value every time until the current reference time is equal to the first time; wherein the specified time calibration value is less than or equal to a preset time duration value.

13. The method of any one of claims 1 to 11, wherein the cell is a basic unit with a fixed length and a fixed format feature, and the cell comprises a Fine Grain Base Unit defined by a standard of a mobile communication operator.

14. An apparatus for sending a cell stream, comprising:
a time detection module configured to detect a time deviation value between an actual time of sending a cell in a designated device and a reference time;
a code block calculation module configured to calculate a total number of code blocks corresponding to the time deviation value; and
a code block insertion module configured to control the designated device to insert code blocks of a preset type into the cell stream to be sent according to the calculated number of code blocks, so as to adjust the actual time of sending the cell in the designated device to the reference time.

15. A network device, comprising:
at least one processor; and
a memory having stored thereon at least one computer program, the at least one computer program, executed by the at least one processor, causes the at least one processor to implement the method of any one of claims 1 to 13.

16. A computer-readable storage medium storing a computer program, the computer program, executed by a processor, causes the processor to implement the method of any one of claims 1 to 13.
